# EUROPÄISCHE PATENTSCHRIFT

(11) **EP 3 588 139 B1**
(45) Veröffentlichungstag und Bekanntmachung des Hinweises auf die Patenterteilung: **03.06.2020**
(21) Anmeldenummer: 18179859.6
(22) Anmeldetag: 26.06.2018
(51) Int. Cl.: G01S 17/42, G01S 17/93, G01S 7/487

(54) **OPTOELEKTRONISCHER SENSOR UND VERFAHREN ZUR ABSTANDSBESTIMMUNG**
OPTOELECTRONIC SENSOR AND DISTANCE MEASUREMENT METHOD
CAPTEUR OPTOÉLECTRONIQUE ET PROCÉDÉ DE DÉTERMINATION DE LA DISTANCE

(43) Veröffentlichungstag der Anmeldung: 01.01.2020
(73) Patentinhaber: SICK AG, 79183 Waldkirch (DE)
(72) Erfinder: Hammes, Markus, 79117 Freiburg (DE); Jachmann, Fabian, 79102 Freiburg (DE); Reichert, Silja, 74850 Schefflenz (DE)

(56) Entgegenhaltungen:
- EP-A1- 0 773 453
- EP-A2- 1 302 784
- DE-A1- 4 201 970
- DE-C1- 4 233 379
- DE-C1- 4 301 228

## Beschreibung

Die Erfindung betrifft einen optoelektronischen Sensor und ein Verfahren zur Erfassung und Abstandsbestimmung von Objekten in einem Überwachungsbereich nach dem Oberbegriff von Anspruch 1 beziehungsweise 12.

Ein optoelektronischer Sensor nach dem Tastprinzip sendet einen Lichtstrahl in den Überwachungsbereich aus, und der von Objekten zurückgeworfene Lichtstrahl wird wieder empfangen, um das Empfangssignal elektronisch auszuwerten. Der Abstand eines angetasteten Objekts wird mit einem Phasen- oder Pulsverfahren gemessen. In einem Laserscanner wird dieses Messprinzip für eine Flächenabtastung benutzt. Der Lichtstrahl überstreicht mit Hilfe einer Ablenkeinheit periodisch den Überwachungsbereich. Der jeweils gemessene Abstand wird einer Winkellage der Ablenkeinheit zugeordnet, und damit ist der Ort eines Objektes in dem Überwachungsbereich in zweidimensionalen Polarkoordinaten erfasst. Die dritte Raumkoordinate kann durch eine Relativbewegung in Querrichtung abgedeckt werden.

Laserscanner werden in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Bei einem Einsatz im Außenbereich (Outdoor) stellen die Umwelteinflüsse, insbesondere Nebel, Regen und Schnee, besondere Herausforderungen für die Zuverlässigkeit und den störungsfreien Betrieb dar. Während diese Wettereinflüsse im Innenbereich bestimmungsgemäß ausgeschlossen werden können, sind sie im Außenbereich zwangsläufig vorhanden und nicht kontrollierbar, jedoch sehr relevant für den produktiven Ablauf im Logistik- oder Produktionsumfeld. Eine vollständige Wechselwirkungsfreiheit zwischen dem optischen Sensor und den Wettereinflüssen ist in aller Regel nicht mit vertretbarem Aufwand möglich.

Laserscanner für reine Automatisierungs- und Messaufgaben können Nebeleffekte weitestgehend dadurch ausblenden, dass ihre Empfindlichkeit so weit reduziert wird, dass Nebel nur in Extremfällen sehr hoher Dichte störend wird. Selbst dann gibt es allenfalls einen Ausfall von nutzbaren Messdaten, jedoch keine sicherheitsrelevante Detektion, so dass keine weiteren Maßnahmen zur Beherrschung von Nebeldämpfung vorgesehen werden müssen.

Dagegen gibt es bisher keine befriedigenden Konzepte für Sicherheitslaserscanner im Außenbereich und auch keine anderen Sensortechnologien, die für sich alleine Daten zur sicheren Überwachung liefern. Herkömmliche Sicherheitslaserscanner sind vielmehr weit überwiegend im Innenbereich eingesetzt. Der Betrieb unter Einfluss von Regen und Nebel ist hier im Sicherheitskonzept ausgeschlossen. Bei sicheren Anwendungen im Außenbereich, wie dem autonomen oder teilautonomen Fahren, werden Daten verschiedener Sensoren fusioniert.

Setzt man einfach einen herkömmlichen Laserscanner für den Innenbereich im Außenbereich ein, so ergibt sich bei dichtem Nebel oder starker Beeinträchtigung der Sicht nur ein Verfügbarkeitsproblem. Das Nebelecho ist ausreichend stark, der Nebel wird als sicherheitsrelevantes Objekt behandelt. Deshalb ergibt sich kein sicherheitskritischer Ausfall, sondern nur eine unnötige Abschaltung. Bei mittleren Sichtweiten besteht jedoch auch die Möglichkeit, dass der Nebel selbst kein überschwelliges Lichtecho verursacht, aber aufgrund seiner Dämpfungswirkung die Erkennung eines sicherheitsrelevanten Objekts verhindert, weil das Objektecho zu schwach wird. Das ist dann sogar ein gefahrbringender Ausfall mit Sicherheitsrelevanz, und ein sicherer Laserscanner muss für diesen Fehlerfall eine Fehlerbeherrschungsmaßnahme vorsehen.

In der DE 10 2009 057 104 A1 unterscheidet ein Laserscanner aufgrund der Form der Empfangspulse, ob ein Objekt oder nur ein Störer als sogenanntes weiches Ziel angetastet wurde. Obwohl das eine hilfreiche Information ist, lässt sich daran nicht entscheiden, ob der Laserscanner noch detektionsfähig ist, sich also beispielsweise weitere relevante Ziele im Nebel verbergen. Zudem muss das Empfangssignal abgetastet werden, um es untersuchen zu können, was einen erheblichen Mehraufwand darstellt.

Aus der EP 1 302 784 A2 ist eine Sichtweitenbestimmung für einen an einem Fahrzeug angebrachten Laserscanner bekannt. Dabei wird davon ausgegangen, dass homogener Nebel wie eine stationäre Wand detektiert wird. Das erscheint als Ausgangspunkt für eine zuverlässige Erkennung der eigenen Detektionsfähigkeit vor allem bei mittleren Sichtweiten mit dämpfendem Nebel vor einem Objekt problematisch.

Nach der DE 10 2012 112 987 B3 wird ein und dasselbe Empfangssignal ausgewertet, um zugleich einen Abstand und ein Sichttrübungsmaß zu bestimmen. Auch dazu ist wie schon erwähnt die aufwändige Abtastung des Empfangssignals erforderlich.

In der EP 2 541 273 A1 wird das Empfangssignal an einem Splitterelement in zwei Pfade für einen hoch- und einen niederfrequenten Anteil geteilt. Mittels des hochfrequenten Anteils werden harte Ziele oder Objekte detektiert, während der niederfrequente Anteil zur Bestimmung der Sichttrübung genutzt wird. Das erfordert einen doppelten Auswertungspfad, der schon im analogen Teil der Auswertung beginnt.

In der EP 2 182 377 A1 verdoppelt ein Laserscanner das Signal in zwei Pfade, die unterschiedlich stark verstärkt werden. Dabei geht es aber darum, insgesamt einen größeren Dynamikbereich abzudecken. Eine Sichttrübung wird dabei nicht angesprochen.

Die DE 197 17 399 A1 schlägt vor, in einem Pulslaufzeitverfahren anhand von typischen Signalformen Entfernung, Zuordnung von Objekten und Art sowie Maß der Sichtweiteneinschränkung zu ermitteln. Dafür wird allerdings eine Fuzzy-Logik eingesetzt, deren Einsatz sich in der Sicherheitstechnik verbietet.

Die EP 1 085 346 A1 versucht das Empfangssignal als Folge von Gauß-Impulsen zu modellieren, um so atmosphärische Partikel und Objekte zu lokalisieren. Die dafür erforderlichen Fouriertransformationen und Korrelationen sind aufwändig. Es ist auch nicht ersichtlich, wie anhand des Modells zuverlässig bewertet werden könnte, ob noch eine für die Sicherheitsfunktion ausreichende Detektionsfähigkeit verbleibt.

In der noch unveröffentlichten deutschen Patentanmeldung mit dem Aktenzeichen 10 2017 117 162 wird in einem Laserscanner eine Verteilung aus einer Vielzahl von Abstandsmessungen gebildet und mit einer Referenzverteilung verglichen, um die Detektionsfähigkeit zu beurteilen. Dazu müssen Daten über zahlreiche Abstandsmessungen kumuliert und ausgewertet werden.

In der EP 3 287 809 A1 überwacht ein Laserscanner eine Vielzahl von Überwachungsfeldern innerhalb eines Schutzfeldes und zählt, wie oft darin Objekte detektiert werden. Aus dieser Häufigkeit wird ein Detektionssicherheitsmaß abgeleitet, und bei geringer Detektionssicherheit erfolgt die weitere Überwachung genauer und deshalb mit erhöhter Ansprechzeit, die wiederum durch reduzierte Arbeits- und Bewegungsgeschwindigkeiten einer überwachten Maschine beziehungsweise eines Fahrzeugs kompensiert wird. Insbesondere bei moderatem Nebel steigt aber die Zahl der detektierten Objekte gar nicht an, vielmehr werden wegen der Dämpfung sogar Objekte übersehen. Verfahren zur Sichtweitenbestimmung eines optoelektronischen Sensors sind auch aus DE 43 01 228 C1 und DE 42 33 379 C1 bekannt.

Es ist daher Aufgabe der Erfindung, den verlässlichen Einsatz eines gattungsgemäßen Sensors im Außenbereich zu ermöglichen.

Diese Aufgabe wird durch einen optoelektronischen Sensor und ein Verfahren zur Erfassung und Abstandsbestimmung von Objekten in einem Überwachungsbereich nach Anspruch 1 beziehungsweise 12 gelöst. Der Sensor misst nach dem Tastprinzip mit einem Sendelichtstrahl, der nach Remission oder Reflexion an einem Objekt wieder empfangen wird. Das dabei erzeugte Empfangssignal wird mit einem Lichtlaufzeitverfahren ausgewertet. In einer ersten Abstandsmessung mit einer ersten Empfindlichkeit wird so ein erster Objektabstand bestimmt. Vorzugsweise wird ein Einzelpulsverfahren oder ein Pulsmittelungsverfahren verwendet, bei dem der Sendelichtstrahl mindestens einen Sendepuls aufweist.

Die Erfindung geht von dem Grundgedanken aus, eine weitere Messung mit einer anderen Empfindlichkeit einzubeziehen, um eine eventuell durch Umwelteinflüsse eingeschränkte Detektionsfähigkeit aufzudecken, d.h. ob oder bis zu welcher Entfernung der Sensor detektionsfähig ist. Es wird in einer zweiten Abstandsmessung bei einer zweiten Empfindlichkeit ungleich der ersten Empfindlichkeit ein zweiter Objektabstand bestimmt. Auch der zweite Objektabstand wird vorzugsweise anhand der Lichtlaufzeit eines ausgesandten und wieder empfangenen Sendelichtstrahls gemessen. Die beiden bei unterschiedlichen Empfindlichkeiten gemessenen Objektabstände werden miteinander verglichen, und anhand dieses Vergleichs wird eine Einschränkung der Sichtweite festgestellt. Ohne Sichtbehinderung wäre nämlich allenfalls ein kleiner Unterschied zu erwarten, ähnlich einer remissionsabhängigen Messungenauigkeit bei hellen und dunklen Objekten, der womöglich sogar kompensiert wird (Schwarz-Weiß-Verschiebung). Bei eingeschränkter Sichtweite dagegen unterscheiden sich die Abstandswerte in charakteristischer Weise und anders, als eine bloße Empfindlichkeitsveränderung bei freier Sicht erwarten ließe.

Die Erfindung hat den Vorteil, dass eine sichere Detektion und hohe Verfügbarkeit des Sensors auch bei Sichteinschränkungen wie Nebel, Regen und Schnee gewährleistet ist. Es müssen keine energetischen Reserven vorgehalten werden, die bei klarer Sicht gar nicht benötigt werden. Zudem kann die sichere Erkennung einer eingeschränkten Sichtweite verwendet werden, frühzeitig eine Warnung an den Anwender zu senden, um eventuell weitere Maßnahmen einzuleiten beziehungsweise seinen übergeordneten Prozessablauf anzupassen. In aller Regel lässt es sich erreichen, dass der Betrieb mit verminderter Geschwindigkeit aufrechterhalten wird, statt eine überwachte Maschine vollständig zu stoppen und auf bessere Sichtbedingungen zu warten. Für bestimmte Maschinen, beispielsweise Fahrzeuge, wird auch in dichtem Nebel ein Betrieb ermöglicht oder die Produktivität erhöht, wo sonst durch das eigene Lichtecho Störungen aufträten.

Der Sensor ist vorzugsweise als Laserscanner ausgebildet. Dabei ist eine bewegliche, insbesondere drehbare Ablenkeinheit vorgesehen, beispielsweise ein rotierender Optikkopf mit Lichtsender und Lichtempfänger oder ein rotierender Drehspiegel, mit deren Hilfe der Sensor periodisch zumindest einen Abschnitt einer Scan- oder Überwachungsebene abtastet. Laserscanner eignen sich durch ihre Flächen- oder sogar Raumabtastung besonders für Sicherungsaufgaben.

De Auswertungseinheit ist bevorzugt dafür ausgebildet, bei der ersten Abstandsmessung das Empfangssignal mit einer Detektionsschwelle zu bewerten. Mit einem solchen Schwellwertverfahren wird die zeitliche Position eines Echos im Empfangssignal bestimmt. Es ist denkbar, mehrere gestaffelte Detektionsschwellen zu verwenden, um eine remissionsabhängige Verschiebung des Zeitpunkts der Schwellüberschreitung zu kompensieren. Das fällt als Ganzes immer noch in den Rahmen der ersten Abstandsmessung bei der ersten Empfindlichkeit.

Die zweite Empfindlichkeit ist vorzugsweise durch Verwendung einer weiteren Schwelle ungleich der Detektionsschwelle eingestellt. Es wird also je ein Abstandswert mit unterschiedlichen Schwellen oder, zum Ausgleich einer remissionsabhängigen Verschiebung, unterschiedlichen Schwellengruppen gemessen. Bei einer analogen Auswertung kann der Schwellenübergang in einem Komparator erfasst und dies als Grenzzeitpunkt der Lichtlaufzeitmessung genutzt werden. Bei einer digitalen Auswertung wird das Empfangssignal gesampelt und dann darauf eine Auswertungsschwelle angewandt, um ein Empfangsecho zeitlich zu lokalisieren. Statt mittels einer weiteren Schwelle oder in Ergänzung dazu kann die zweite Empfindlichkeit auch durch eine Veränderung der Ausgangsleistung des Lichtsenders beziehungsweise eine Veränderung eines Verstärkungsfaktors eines dem Lichtempfänger zugeordneten Verstärker eingestellt werden, sei es durch Anpassung einer APD-Vorspannung oder einen eigenen, nachgeschalteten Verstärker.

Die Auswertungseinheit ist bevorzugt dafür ausgebildet zu prüfen, ob der erste Objektabstand und der zweite Objektabstand um mehr als eine Höchstabstandsdifferenz voneinander abweichen. Sofern das Empfangssignal nur das Objektecho enthält, wird auch bei einer veränderten Empfindlichkeit dasselbe Objektecho gemessen, mit nur geringem Einfluss auf den Objektabstand, weil eine andere Stelle der Flanke des Objektechos den maßgeblichen Zeitpunkt für die Lichtlaufzeit bestimmt. Bei einer Sichteinschränkung, anschaulich am Beispiel von Nebel erläutert, wird aber mit den beiden Empfindlichkeiten ein ganz anderes Ereignis gemessen, nämlich einmal ein Nebelpeak und einmal ein Objektpeak. Die Höchstabstandsdifferenz orientiert sich daher bevorzugt an der Breite des Sendepulses und entspricht beispielsweise dessen halber bis doppelter Halbwertsbreite, wobei dies keine festen Werte sind, die auch noch über- oder unterschritten werden können. Liegen die beiden Abstandswerte nämlich so weit auseinander, so sind sie nicht im selben Peak gemessen, folglich gibt es einen Nebelpeak und damit eine relevante Sichttrübung.

Die Auswertungseinheit ist bevorzugt dafür ausgebildet, bei einer unempfindlicheren zweiten Abstandsmessung an einer sprunghaften Abweichung der jeweils gemessenen zweiten Objektabstände gegenüber den ersten Objektabständen zu größeren Abstandswerten und/oder bei einer empfindlicheren zweiten Abstandsmessung an einer sprunghaften Abweichung zu kleineren Abstandswerten eine eingeschränkte Sichtweite zu erkennen. Im ersten Fall wurde mit der ersten Abstandsmessung in Wahrheit der Nebel gemessen, und bei geringerer Empfindlichkeit beziehungsweise höherer Detektionsschwelle wird das dahinter liegende Objekt erfasst. Im zweiten Fall misst zwar die erste Abstandsmessung noch korrekt das Objekt. Bei höherer Empfindlichkeit beziehungsweise niedrigerer Detektionsschwelle zeigt sich aber, dass dem Objektpeak bereits ein Nebelpeak von aufkommendem Nebel vorgelagert ist.

Die Auswertungseinheit ist bevorzugt dafür ausgebildet, die zweite Abstandsmessung und/oder deren Auswertung nur wahlweise in einem Betriebsmodus mit Erkennung von Sichteinschränkungen durchzuführen. Der Sensor kann also auch ohne Erkennung von Sichteinschränkungen eingesetzt werden, beispielsweise im Innenbereich oder bei gutem Wetter. Die sichere Nebelerkennung wird für den Einsatz im Außenbereich zugeschaltet, oder sie wird sogar situationsabhängig mittels eines händischen oder automatischen Schlechtwettersignals aktiviert.

Die Auswertungseinheit ist bevorzugt dafür ausgebildet, zwischen ersten Abstandsmessungen eine zweite Abstandsmessung durchzuführen. Die zweite Abstandsmessung wird hier eingestreut, insbesondere zyklisch alle n erste Abstandsmessungen eine zweite Abstandsmessung zur Erkennung von eingeschränkter Sicht eingefügt. Dadurch kann im Wesentlichen das bisherige Messverfahren und vor allem der Hardwareaufbau beibehalten werden, der Einfluss auf die Ansprechzeit ist nur moderat.

Alternativ ist die Auswertungseinheit dafür ausgebildet, eine erste Abstandsmessung und eine zweite Abstandsmessung parallel zueinander durchzuführen. Dazu ist ein zusätzlicher, paralleler Auswertungskanal im analogen und/oder digitalen Empfangspfad vorgesehen, was einen gewissen Zusatzaufwand bedeutet. Dafür kann die erste Abstandsmessung und damit die primäre Detektionsaufgabe ohne Einschränkung durchgeführt werden.

Die Auswertungseinheit ist nochmals alternativ dafür ausgebildet, den zweiten Objektabstand von einem anderen Sensor zu empfangen. Der Teil der Auswertungseinheit, der die Objektabstände vergleicht und diesen Vergleich im Sinne einer Sichteinbuße interpretiert, kann dann in einem der beteiligten Sensoren oder in einer übergeordneten Steuerung implementiert sein. Ein solcher Sensorverbund bedeutet einen recht hohen Aufwand, kommt aber dafür mit vorhandener Hardware aus. Dennoch ist erfindungsgemäß bevorzugt, dass der Sensor sowohl seine primäre Detektionsfunktion als auch die Bewertung der Sichtweite autark vornimmt, also ohne anderen Sensor.

Die Auswertungseinheit ist bevorzugt dafür ausgebildet, eine Einschränkung der Sichtweite unter Einbeziehung eines dritten Objektabstands aus mindestens einer dritten Abstandsmessung mit einer dritten Empfindlichkeit ungleich der ersten Empfindlichkeit und der zweiten Empfindlichkeit zu beurteilen. Solche zusätzlichen Abstandsmessungen können analog zur zweiten Abstandsmessung nacheinander, parallel oder durch zusätzliche Sensoren durchgeführt werden. Damit wird eine feiner abgestufte Bewertung der Sichtweite ermöglicht.

Der Sensor ist bevorzugt als sicherer Sensor ausgebildet, der einen sicheren Ausgang aufweist und dessen Auswertungseinheit dafür ausgebildet ist, bei Erkennen eines sicherheitsrelevanten Ereignisses in dem Überwachungsbereich ein sicherheitsgerichtetes Signal über den sicheren Ausgang auszugeben. Ein Beispiel für ein sicherheitsrelevantes Ereignis ist ein unzulässiger Eingriff in ein vorgebbares Schutzfeld innerhalb des Überwachungsbereichs. Aufgrund der Fähigkeit, Einschränkungen der Sichtweite zu erkennen und damit die eigene Detektionsfähigkeit zu überprüfen, werden mit einem erfindungsgemäßen Sensor auch sicherheitstechnische Anwendungen im Outdoorbereich beziehungsweise in staubigen oder anders verunreinigten Umgebungen möglich. Das sicherheitsgerichtete Signal kann ein Nothalt sein. Gerade in mobilen Anwendungen genügt aber oft auch ein Verlangsamen, beziehungsweise ein Ausweichen kann die geeignetere Maßnahme sein.

Die Auswertungseinheit ist bevorzugt dafür ausgebildet, ein sicherheitsgerichtetes Signal auszugeben, wenn der Sensor nicht detektionsfähig ist beziehungsweise eine nicht tolerierte Einschränkung der Sichtweite festgestellt wurde. Die spezifizierte Reichweite kann dann nicht mehr gewährleistet werden, der Sensor oder Laserscanner seine Sicherheitsfunktion nicht mehr erfüllen. Ein großer erfindungsgemäßer Vorteil ist, dass diese Situation sicher erkannt wird.

Besonders vorteilhaft ist der Sensor für den mobilen Einsatz an Fahrzeugen (wie AGV, Automated Guided Vehicle). Es besteht keine Notwendigkeit, Signalreserven für extreme Umwelteinflüsse vorzuhalten. Dadurch würde die Schutzfeldreichweite eines Laserscanners unverhältnismäßig reduziert, mit der Folge geringer Fahrzeuggeschwindigkeiten und damit unnötiger Einschränkungen der Produktivität. Stattdessen kann erfindungsgemäß das Fahrzeug seine Geschwindigkeit und gegebenenfalls seine Schutzfelder situationsangepasst optimal einstellen und genau wie ein menschlicher Fahrer bei schlechter Sicht die Geschwindigkeit sicherheitsgerichtet vermindern. Der Einfluss auf die Produktivität ist erheblich, weil der Laserscanner selbst bei starkem Niederschlag oder starkem Nebel noch funktioniert und das Fahrzeug immer noch mit relativ schneller Geschwindigkeit fahren kann. Würde dagegen der Laserscanner aufgrund von Umwelteinflüssen ausfallen, müsste das Fahrzeug aus Sicherheitsgründen in Schleichfahrt bei weniger als 0,25 m/s übergehen und wäre daher im Außenbereich deutlich langsamer unterwegs.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer beispielhaften Ausführungsform eines erfindungsgemäßen Sicherheitssensors;
- Fig. 2: eine Darstellung eines beispielhaften Empfangssignals zur Erläuterung der Messung bei unempfindlicherer Schwelle;
- Fig. 3: eine Darstellung ähnlich Figur 2 mit empfindlicherer Schwelle; und
- Fig. 4: eine Darstellung eines beispielhaften Empfangssignals mit Veränderung durch Sichttrübung bei einem Empfangspfad mit einem Bipolarfilter.

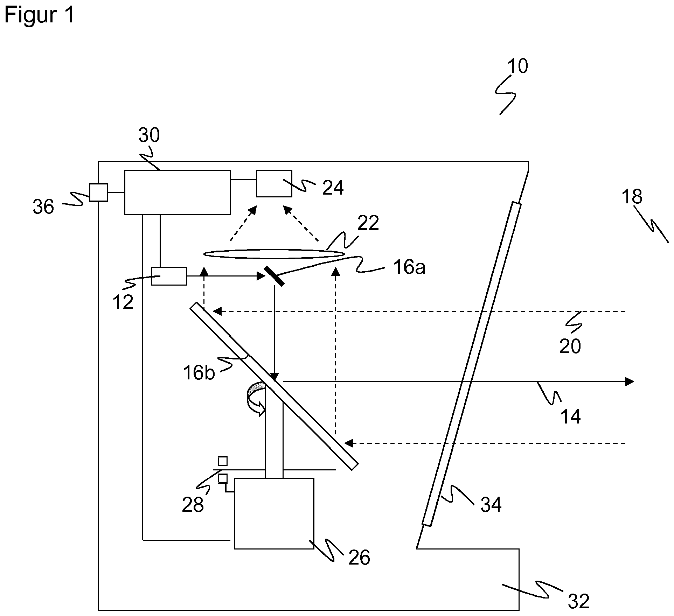

Figur 1 zeigt eine schematische Schnittdarstellung durch einen Laserscanner 10. Ein Lichtsender 12, beispielsweise ein Laser, erzeugt einen Lichtstrahl 14, der vorzugsweise für ein Puls- oder Pulsmittelungsverfahren einen oder mehrere Lichtimpulse aufweist. Der Lichtstrahl 14 wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Laserscanner 10 zurück und wird dort über die Ablenkeinheit 16b und mittels einer Empfangsoptik 22 von einem Lichtempfänger 24 detektiert, beispielsweise einer Photodiode oder APD (Avalanche Photo Diode), und in ein elektrisches Empfangssignal gewandelt.

Die Lichtablenkeinheit 16b ist hier als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Aus der jeweiligen Winkelstellung der Ablenkeinheit 16b wird mittels des Encoders 28 auf die Winkellage des angetasteten Objektes in dem Überwachungsbereich 18 geschlossen.

Zusätzlich wird die Lichtlaufzeit zwischen Aussenden des Lichtstrahls 14 und Empfangen des remittierten Lichts 20 nach Reflexion an dem Objekt in dem Überwachungsbereich 18 ermittelt und daraus unter Verwendung der Lichtgeschwindigkeit auf die Entfernung des Objektes von dem Laserscanner 10 geschlossen. Diese Auswertung erfolgt in einer Auswertungseinheit 30, die dafür mit dem Lichtsender 12, dem Lichtempfänger 24, dem Motor 26 und dem Encoder 28 verbunden ist. Es stehen nun über den Winkel und die Entfernung zweidimensionale Polarkoordinaten aller Objekte in dem Überwachungsbereich 18 zur Verfügung. Alle genannten Funktionskomponenten sind in einem Gehäuse 32 angeordnet, das im Bereich des Lichtaus- und Lichteintritts eine Frontscheibe 34 aufweist.

In einer sicherheitstechnischen Anwendung vergleicht die Auswertungseinheit 30 vorzugsweise die Position der erfassten Objekte mit einem oder mehreren Schutzfeldern, deren Geometrie der Auswertungseinheit 30 durch entsprechende Parameter vorgegeben oder konfiguriert ist. Damit erkennt die Auswertungseinheit 30, ob ein Schutzfeld verletzt ist, also ob sich ein unzulässiges Objekt darin befindet, und schaltet je nach Ergebnis einen Sicherheitsausgang 36 (OSSD, Output Signal Switching Device). Dadurch wird beispielsweise ein Nothalt einer angeschlossenen und von dem Laserscanner 10 überwachten Maschine ausgelöst oder ein Fahrzeug abgebremst, auf dem der Laserscanner 10 montiert ist. Ein solcher Laserscanner wird durch Erfüllung der einleitend genannten oder vergleichbaren Normen und die dafür erforderlichen Maßnahmen als Sicherheitslaserscanner ausgebildet.

Es ist denkbar, zumindest einen Teil der Auswertungseinheit 30 außerhalb des Laserscanners 10 zu implementieren. Vorzugsweise ist aber zumindest die gesamte sicherheitsrelevante Auswertung einschließlich der Abstandsmessung und der nachfolgend erläuterten Beurteilung der Sichtweite Teil des Laserscanners 10, der damit autonom messen und die Sicherheit beurteilen kann.

Der anhand der Figur 1 beschriebene Laserscanner 10 dient als Beispiel eines optoelektronischen Sensors, aber die Erfindung ist darauf nicht beschränkt. Es sind insbesondere von Laserscannern unterschiedlichste andere Bauformen bekannt, etwa mit biaxialer statt hier koaxialer Anordnung von Lichtsender 12 und Lichtempfänger 24 oder einem drehenden Messkopf, der Lichtsender 12 und/oder Lichtempfänger 24 umfasst oder durch Lichtleiter angekoppelt ist, sowie mit mehreren Messmodulen oder zusätzlicher Beweglichkeit, um einen dreidimensionalen Raumbereich abzutasten. Die erfindungsgemäße Bewertung der Sichtweite, die anschließend genauer erläutert wird, ist aber auch beispielsweise für einen eindimensionalen entfernungsmessenden Taster mit nicht bewegtem Messstrahl oder eine Anordnung mehrerer entfernungsmessender Strahlen anwendbar.

Der Laserscanner 10 ist auch unter Umgebungsbedingungen mit eingeschränkter Sicht als Sicherheitslaserscanner einsetzbar, also outdoorfähig beziehungsweise robust gegenüber verunreinigten Umgebungen. Dazu ist die Auswertungseinheit 30 in der Lage, anhand von Messergebnissen zu beurteilen, ob die Sichtweite eingeschränkt ist. Dann kann rechtzeitig reagiert werden, etwa die überwachte Maschine abgeschaltet, ein Fahrzeug abgebremst oder dessen Geschwindigkeit reduziert werden.

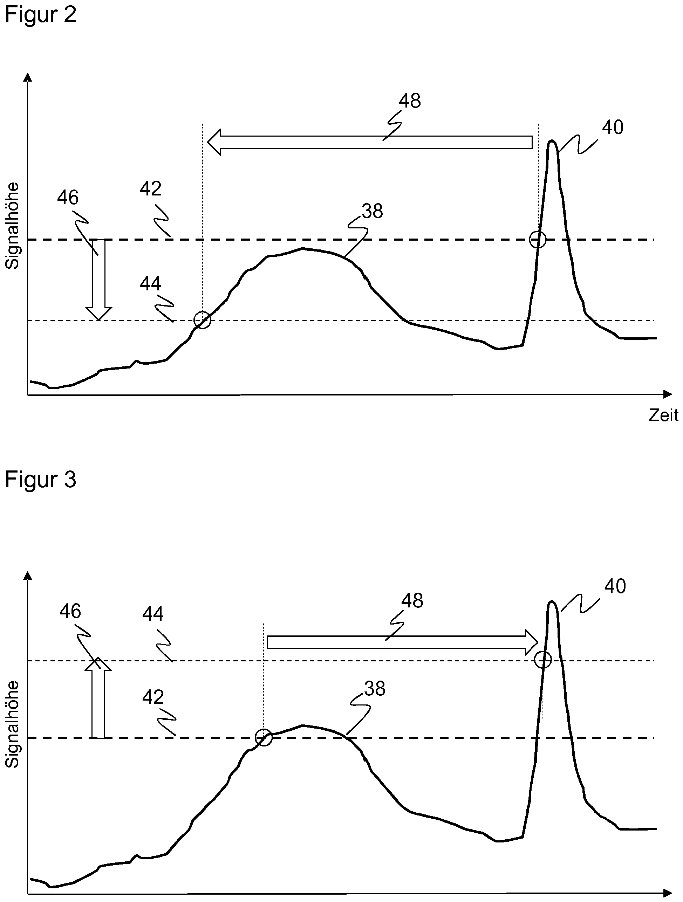

Figur 2 zeigt ein beispielhaftes Empfangssignal eines Laserscanners 10. Die auf der X-Achse aufgetragene Zeit entspricht zugleich über die Lichtgeschwindigkeit dem Abstand. Die Y-Achse zeigt in beliebigen Einheiten die jeweilige Signalhöhe.

Bei Nebel, hier stellvertretend als Beispiel für eine Beeinträchtigung der Sichtweite herangezogen, wird ein erstes breites und flaches Signalmaximum durch den Nebel verursacht, das als Nebelpeak 38 bezeichnet wird. Nebel darf an sich als homogen angesehen werden, das entspräche einem flachen Empfangssignal. Der Nebelpeak 38 ist das Resultat der abstandsabhängigen Empfindlichkeit des Laserscanners 10, der sogenannten Signaldynamik, die maßgeblich durch deren Empfangsoptik 22 bestimmt ist. Die Position des Nebelpeaks 38 entspricht dem Signaldynamikmaximum oder dem Abstand größter Empfindlichkeit des Laserscanners 10.

Das schmale, hohe Maximum auf der rechten Seite bei einem größeren Abstand entspricht einem Objekt, und dieser Objektpeak 40 soll bestimmungsgemäß von dem Laserscanner 10 detektiert beziehungsweise dessen zeitliche Position für die Bestimmung der Lichtlaufzeit gemessen werden. Mit zunehmender Nebeldichte wächst der Nebelpeak 38 auf Kosten des Objektpeaks 40.

In einer bevorzugten Auswertung wird das Empfangssignal mit einer Detektionsschwelle 42 bewertet. Das muss nicht digital in einem gesampelten Signalzug geschehen, wie Figur 2 suggeriert, sondern kann ebenso bereits analog beispielsweise durch einen Komparator erfolgen. In Figur 2 ist der Nebel nicht dicht genug, und der Nebelpeak 38 bleibt unter der Detektionsschwelle 42. Es droht aber bald eine Situation, in der die Detektionsfähigkeit durch den aufkommenden Nebel beeinträchtigt ist. Für den üblichen Betrieb des Laserscanners 10 wird die Detektionsschwelle 42 so ausgelegt, dass sicherheitsrelevante Objekte zuverlässig detektiert werden, und zwar vorzugsweise zunächst ohne Rücksichtnahme auf womöglich eingeschränkte Sichtweiten. Prinzipiell lässt sich über die Wahl der Detektionsschwelle 42 auch beeinflussen, wie dicht Nebel sein muss, damit es zu einer direkten Nebeldetektion kommt, der Nebelpeak 38 also überschwellig wird.

Für eine sichere Feststellung einer eingeschränkten Sichtweite, oder vereinfachend ausgedrückt eine Nebelerkennung, etwa bei Betrieb des Laserscanners 10 im Außenbereich, erfolgt nun eine weitere Bewertung mit einer zweiten Schwelle 44, die gegenüber der Detektionsschwelle 42 angehoben oder abgesenkt ist. Dabei kann unmittelbar eine Komparatorschwelle eines Komparators in einem analogen Empfangspfad nach dem Lichtempfänger 24 verändert werden, um wahlweise die Detektionsschwelle 42 oder die zweite Schwelle 44 anzuwenden. Alternativ wird das Empfangssignal zunächst abgetastet und dann digital mit der Detektionsschwelle 42 beziehungsweise der zweiten Schwelle 44 bewertet. Eine Schwellenanpassung lässt sich ebenso erreichen, indem das Empfangssignal selbst angehoben oder gedämpft wird, sei es durch Anpassung der Leistung des Lichtsenders 12 oder einer Verstärkung des Lichtempfängers 24 beziehungsweise eines diesem nachgeordneten Verstärkers.

In der Auswertung wird nun geprüft, wie weit sich die Abstandsmesswerte durch die unterschiedlichen Schwellen 42, 44 voneinander unterscheiden. Die Erwartung bei ausreichender Sicht ist, dass der Unterschied gering bleibt, weil eine andere Schwelle lediglich einen leicht verschobenen Punkt derselben Flanke desselben Peaks 38, 40 trifft.

Bei Nebel, der selbst noch keinen überschwelligen Nebelpeak 38 erzeugt, führt die in Figur 2 mit einem Pfeil 46 illustrierte Absenkung der Detektionsschwelle 42 auf die zweite Schwelle 44 dazu, dass nun anstelle des Objektpeaks 40 der Nebelpeak 38 ausgewertet wird. Dadurch springt der gemessene Abstandswert systematisch und signifikant in Richtung des Signaldynamikmaximums auf einen deutlich kleineren Abstandswert, wie durch einen Pfeil 48 angedeutet. Als Maßstab, welche Veränderung der Abstandswerte als signifikant anzusehen ist, eignet sich die Halbwertsbreite des Objektpeaks 40, die wiederum von der bekannten Halbwertsbreite des Sendepulses abhängt. Eine Veränderung, die außerhalb deren Größenordnung liegt, misst nicht mehr im selben Objektpeak 40, wie aber bei freier Sicht erwartet würde. Übersteigt somit der Unterschied der mit den Schwellen 42, 44 gemessenen Abstände oder anschaulich die Länge des Pfeils 48 eine Höchstabstandsdifferenz, die vorzugsweise aus der Halbwertsbreite des Sendepulses abgeleitet ist, so kann der Laserscanner ein sicherheitsgerichtetes Nebelsignal ausgeben.

Während Figur 2 das Absenken der Detektionsschwelle 42 illustriert, zeigt Figur 3 einen Anwendungsbereich für eine erhöhte zweite Schwelle 44. Je nach Ausführungsform wird die Detektionsschwelle 42 wie in Figur 2 abgesenkt, wie in Figur 3 erhöht oder beides.

Im Falle der Figur 3 ist der Nebel nun dicht genug, dass der Nebelpeak 38 über die Detektionsschwelle 42 hinausgeht. Der Laserscanner 10 misst also gar nicht auf das Objekt, sondern auf den Nebel. Wird nun nochmals mit einer zweiten, höheren Schwelle 44 gemessen, so wird damit der Objektpeak 40 anstelle des Nebelpeaks 38 erfasst. Es wird also sprunghaft ein signifikant größerer Abstand entsprechend der Länge des Pfeils 48 gemessen. Ein Vergleich der Abstandswerte, die mit der Detektionsschwelle 42 und der angehobenen zweiten Schwelle 44 gemessen werden, deckt eine systematische, sprunghafte und signifikante Änderung nun zu größeren Abständen auf, aus der auf die Anwesenheit von dichtem Nebel geschlossen wird.

Es gibt noch den Fall, der von den Figuren 2 und 3 nicht abgedeckt ist, in dem die Nebeldichte die Höhe des Objektpeaks 40 unter diejenige des Nebelpeaks 38 drückt. Dann muss der Nebelpeak 38 oberhalb der Detektionsschwelle 42 liegen, andernfalls ist diese nicht richtig ausgelegt. Durch Anheben der zweiten Schwelle 44 wird dann bewirkt, dass gar kein Abstand mehr gemessen wird, weil das gesamte Empfangssignal unter der zweiten Schwelle 44 liegt. Das ist aber in sich ein zuverlässiges Zeichen für Nebel und auch konsistent mit der bisherigen Auswertung, wenn man dem Ausbleiben eines Echos den Abstandswert Unendlich zuweist.

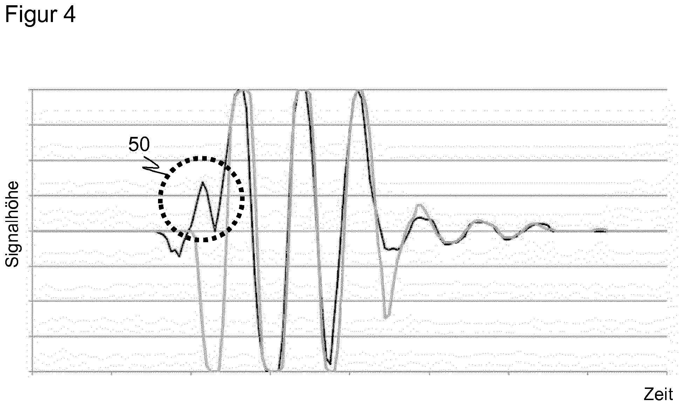

Figur 4 zeigt noch ein weiteres beispielhaftes Empfangssignal, und zwar überlagert in grau bei freier Sicht und in schwarz bei Nebel, der noch nicht dicht genug ist, um eine direkte Detektion auszulösen. Die Schwingungen des Signals sind durch ein Bipolarfilter im analogen Teil des Empfangspfades verursacht. Der Empfangspuls stößt dabei einen Schwingkreis an, und dessen Signal wird ausgewertet. Innerhalb des gestrichelten Kreises 50 zu Beginn des Empfangssignals ist deutlich ein zusätzlicher Peak zu erkennen, der durch den Nebel verursacht ist.

Der Empfangszeitpunkt eines solchen Empfangssignals wird nicht mit einer einfachen Detektionsschwelle 42 bestimmt, sondern es wird beispielsweise nach dem ersten Nulldurchgang von Minimum auf Maximum gesucht. Auch das ist aber ganz deutlich und sprunghaft in dem schwarz dargestellten Empfangssignal nach vorne verschoben. Es ließen sich auch alternativ zwei Schwellen 42, 44 definieren, die zwischen den beiden Fällen unterscheiden, etwa solche, die auf das jeweilige erste Minimum oder Maximum ansprechen.

Dieses Beispiel soll unterstreichen, dass andere Messverfahren denkbar sind, die andere Nebelsignaturen und andere Detektionsschwellen zeigen, denn auch mit dem Beispiel der Figur 4 sollen keineswegs abschließend alle erfindungsgemäßen Möglichkeiten umfasst sein.

Damit kann in diesem Fall der Nebel auch durch eine Variation der Auswerteschwelle in der digitalen Auswertung detektiert werden. Lediglich wenn der Nebel bereits so dicht ist, dass er zur Detektion führt, muss die Klassifizierung durch Anpassung der analogen Schwelle erfolgen.

Unabhängig von der konkreten Gestalt des jeweiligen Empfangssignals kann die zusätzliche Messung mit der zweiten Schwelle 44 in einem zusätzlichen Scan beziehungsweise während einer dafür ausgewählten Umdrehung des Laserscanners 10 durchgeführt werden, beispielsweise zyklisch alle *n* Scans eingestreut werden. Wenn die jeweilige Umstellung der Empfindlichkeit schnell genug erfolgt, insbesondere während der Drehbewegung durch einen rückwärtigen Totbereich des Laserscanners 10, so geht dafür ein Scan pro *n* eigentlichen Messungen verloren. Die Ansprechzeit erhöht sich also für diese Zusatzfunktion einer Beurteilung der Sichtweite nur moderat.

Die Detektionsschwelle 42 kann sowohl abgesenkt als auch angehoben werden, und außerdem kann sie in *m* feineren Schritten variiert werden. Dadurch lässt sich nicht nur sicherheitsrelevanter Nebel erkennen, sondern die Sichtweite auch zumindest grob quantifizieren, etwa durch Vergleich mit eingelernten Werten. Dafür muss natürlich in Kauf genommen werden, dass nun zwei oder sogar *m* Scans pro *n* eigentliche Messungen verloren gehen

Um die Ansprechzeit zu verbessern, ist eine parallele Auswertung denkbar. Dazu werden in parallelen Zweigen unterschiedliche Komparatorschwellen angewandt, oder es wird bei digitaler Auswertung eine doppelte Auswertung vorgenommen. Damit gehen keine Scans mehr für die Nebelerkennung verloren, und es ist daher abzuwägen, ob eher eine etwas schlechtere Ansprechzeit oder höhere Hardwareanforderungen in Kauf genommen werden.

Die Nebelerkennung kann auch als optionales Leistungsmerkmal des Laserscanners 10 implementiert sein und beispielsweise durch eine Konfigurationseinstellung wahlweise zu- oder abgeschaltet werden. Damit lassen sich Beeinträchtigungen der Ansprechzeit zum Beispiel bei Einsatz im Innenbereich vermeiden, wo freie Sicht garantiert werden kann.

Statt die Detektionsempfindlichkeit des Laserscanner 10 zu verändern beziehungsweise dessen Detektionsschwelle 42 zu variieren, kann auch ein zweiter Sensor mit anderer Empfindlichkeit hinzugezogen werden. Die Messwerte beider Sensoren werden dann verglichen, sei es in einem der beteiligten Sensoren oder in einer übergeordneten Steuerung.

Hat der Laserscanner 10 eine sicherheitsrelevante Einschränkung der Sichtweite erkannt, so kann in der Anlage, in die der Laserscanner 10 eingebunden ist, eine angemessene sicherheitsgerichtete Reaktion ausgelöst werden. Beispielsweise wird eine Reduktion der Geschwindigkeit eines Fahrzeugs veranlasst, welches der Laserscanner 10 absichert, und gleichzeitig werden die Schutzfelder den neuen Bewegungsbedingungen angepasst. Bei dichtem Nebel ermöglicht die reduzierte Geschwindigkeit daher trotz der reduzierten Sichtweite des Laserscanners 10 den sicheren Betrieb. Ein vollständiger Stillstand des Fahrzeugs kann vermieden werden. In einem sicheren Sensorsystem, das auf Datenfusion von verschiedenen Sensoren basiert, lässt sich die Auswertung den Umgebungsbedingungen anpassen. Bei dichtem Nebel kann beispielsweise die Information eines Radarsensors höher gewichtet werden als die eines optischen Sensors wie eines Laserscanners oder einer Kamera.

## Patentansprüche

1. Optoelektronischer Sensor (10), insbesondere Laserscanner, zur Erfassung und Abstandsbestimmung von Objekten in einem Überwachungsbereich (18), mit einem Lichtsender (12) zum Aussenden eines Sendelichtstrahls (14), einem Lichtempfänger (24) zum Erzeugen eines Empfangssignals aus von Objekten in dem Überwachungsbereich (18) emittiertem oder reflektiertem Sendelicht (20) sowie einer Auswertungseinheit (30), die für eine erste Abstandsmessung mit einer ersten Empfindlichkeit ausgebildet ist, in der anhand der Lichtlaufzeit des ausgesandten und wieder empfangenen Sendelichtstrahls (14, 20) ein erster Objektabstand gemessen wird,
**dadurch gekennzeichnet,**
**dass** die Auswertungseinheit (30) weiterhin dafür ausgebildet ist, durch Vergleich des ersten Objektabstands mit einem zweiten Objektabstand aus einer zweiten Abstandsmessung bei einer zweiten Empfindlichkeit ungleich der ersten Empfindlichkeit eine Einschränkung der Sichtweite festzustellen.

2. Sensor (10) nach Anspruch 1,
wobei die Auswertungseinheit (30) dafür ausgebildet ist, bei der ersten Abstandsmessung das Empfangssignal mit einer Detektionsschwelle (42) zu bewerten.

3. Sensor (10) nach Anspruch 2,
wobei die zweite Empfindlichkeit durch Verwendung einer weiteren Schwelle (44) ungleich der Detektionsschwelle (42), eine Veränderung der Ausgangsleistung des Lichtsenders (12) und/oder eine Veränderung eines Verstärkungsfaktors eines dem Lichtempfänger (24) zugeordneten Verstärkers eingestellt ist.

4. Sensor (10) nach einem der vorhergehenden Ansprüche,
wobei die Auswertungseinheit (30) dafür ausgebildet ist zu prüfen, ob der erste Objektabstand und der zweite Objektabstand um mehr als eine Höchstabstandsdifferenz voneinander abweichen.

5. Sensor (10) nach einem der vorhergehenden Ansprüche,
wobei die Auswertungseinheit (30) dafür ausgebildet ist, bei einer unempfindlicheren zweiten Abstandsmessung an einer sprunghaften Abweichung (48) der jeweils gemessenen zweiten Objektabstände gegenüber den ersten Objektabständen zu größeren Abstandswerten und/oder bei einer empfindlicheren zweiten Abstandsmessung an einer sprunghaften Abweichung (48) zu kleineren Abstandswerten eine eingeschränkte Sichtweite zu erkennen.

6. Sensor (10) nach einem der vorhergehenden Ansprüche,
wobei die Auswertungseinheit (30) dafür ausgebildet ist, die zweite Abstandsmessung und/oder deren Auswertung nur wahlweise in einem Betriebsmodus mit Erkennung von Sichteinschränkungen durchzuführen.

7. Sensor (10) nach einem der vorhergehenden Ansprüche,
wobei die Auswertungseinheit (30) dafür ausgebildet ist, zwischen ersten Abstandsmessungen eine zweite Abstandsmessung durchzuführen.

8. Sensor (10) nach einem der Ansprüche 1 bis 6,
wobei die Auswertungseinheit (30) dafür ausgebildet ist, eine erste Abstandsmessung und eine zweite Abstandsmessung parallel zueinander durchzuführen.

9. Sensor (10) nach einem der Ansprüche 1 bis 6,
wobei die Auswertungseinheit (30) dafür ausgebildet ist, den zweiten Objektabstand von einem anderen Sensor zu empfangen.

10. Sensor (10) nach einem der vorhergehenden Ansprüche,
wobei die Auswertungseinheit (30) dafür ausgebildet ist, eine Einschränkung der Sichtweite unter Einbeziehung eines dritten Objektabstands aus einer dritten Abstandsmessung mit einer dritten Empfindlichkeit ungleich der ersten Empfindlichkeit und der zweiten Empfindlichkeit zu beurteilen.

11. Sensor (10) nach einem der vorhergehenden Ansprüche,
wobei der Sensor (10) als sicherer Sensor ausgebildet ist, der einen sicheren Ausgang (36) aufweist und dessen Auswertungseinheit (30) dafür ausgebildet ist, bei Erkennen eines sicherheitsrelevanten Ereignisses in dem Überwachungsbereich (18) ein sicherheitsgerichtetes Signal über den sicheren Ausgang (36) auszugeben, wobei insbesondere die Auswertungseinheit (30) dafür ausgebildet ist, ein sicherheitsgerichtetes Signal auszugeben, wenn der Sensor (10) eine Einschränkung der Sichtweite erkennt.

12. Verfahren zur Erfassung und Abstandsbestimmung von Objekten in einem Überwachungsbereich (18), wobei ein Sendelichtstrahl (14) ausgesandt, von einem Objekt remittiertes oder reflektiertes Licht (20) erfasst, daraus ein Empfangssignal erzeugt und in einer ersten Abstandsmessung mit einer ersten Empfindlichkeit anhand der Lichtlaufzeit des ausgesandten und wieder empfangenen Sendelichtstrahls (14, 20) ein erster Objektabstand gemessen wird, **dadurch gekennzeichnet,**
**dass** durch Vergleich des ersten Objektabstands mit einem zweiten Objektabstand aus einer zweiten Abstandsmessung bei einer zweiten Empfindlichkeit ungleich der ersten Empfindlichkeit eine Einschränkung der Sichtweite festgestellt wird.

## Claims

1. An optoelectronic sensor (10), in particular a laser scanner, for detecting and determining the distance of objects in a monitored area (18), comprising a light transmitter (12) for transmitting a transmitted light beam (14), a light receiver (24) for generating a received signal from transmitted light (20) remitted or reflected by objects in the monitored area (18), and an evaluation unit (30) configured for a first distance measurement with a first sensitivity measuring a first object distance on the basis of the light time of flight of the transmitted light beam (14, 20) which is transmitted and received again,
**characterized in that** the evaluation unit (30) is further configured to determine a limitation of the range of vision by comparing the first object distance with a second object distance from a second distance measurement at a second sensitivity different from the first sensitivity.

2. The sensor (10) according to claim 1,
wherein the evaluation unit (30) is configured to evaluate the received signal with a detection threshold (42) during the first distance measurement.

3. The sensor (10) according to claim 2,
wherein the second sensitivity is set by using a further threshold (44) different from the detection threshold (42), a change in the output power of the light transmitter (12) and/or a change in a gain factor of an amplifier associated with the light receiver (24).

4. The sensor (10) according to one of the preceding claims,
wherein the evaluation unit (30) is configured to check whether the first object distance and the second object distance differ by more than a maximum distance difference.

5. The sensor (10) according to one of the preceding claims,
wherein the evaluation unit (30) is configured to detect a limited range of vision in the case of a less sensitive second distance measurement by an abrupt deviation (48) of the respectively measured second object distances from the first object distances to larger distance values and/or in the case of a more sensitive second distance measurement by an abrupt deviation (48) to smaller distance values.

6. The sensor (10) according to one of the preceding claims,
wherein the evaluation unit (30) is configured to perform the second distance measurement and/or its evaluation only optionally in an operating mode with detection of visual limitations.

7. The sensor (10) according to one of the preceding claims,
wherein the evaluation unit (30) is configured to perform a second distance measurement between first distance measurements.

8. The sensor (10) according to one of claims 1 to 6,
wherein the evaluation unit (30) is configured to perform a first distance measurement and a second distance measurement parallel to each other.

9. The sensor (10) according to one of claims 1 to 6,
wherein the evaluation unit (30) is configured to receive the second object distance from another sensor.

10. The sensor (10) according to one of the preceding claims,
wherein the evaluation unit (30) is configured to evaluate a limitation of the range of vision taking into account a third object distance from a third distance measurement with a third sensitivity different from the first sensitivity and the second sensitivity.

11. The sensor (10) according to one of the preceding claims,
the sensor (10) being configured as a safe sensor that comprises a safe output (36) and whose evaluation unit (30) is configured to output a safety-related signal via the safe output (36) when a safety-relevant event in the monitoring area (18) is detected, the evaluation unit (30) in particular being configured to output a safety-oriented signal when the sensor (10) detects a limitation in the range of vision.

12. A method for detecting and determining the distance of objects in a monitoring area (18), wherein a transmitted light beam (14) is transmitted, light (20) remitted or reflected by an object is detected, a received signal is generated therefrom and a first object distance is measured in a first distance measurement with a first sensitivity on the basis of the light time of flight of the transmitted light beam (14, 20) which is transmitted and received again,
**characterized in that** a limitation of the range of vision is determined by comparing the first object distance with a second object distance from a second distance measurement at a second sensitivity different from the first sensitivity.

## Revendications

1. Capteur optoélectronique (10), en particulier scanner laser, pour la détection et la détermination de la distance d'objets dans une zone à surveiller (18), comprenant un émetteur de lumière (12) pour émettre un rayon lumineux d'émission (14), un récepteur de lumière (22) pour générer un signal de réception à partir d'une lumière d'émission (20) émise ou réfléchie par des objets dans la zone à surveiller (18), ainsi qu'une unité d'évaluation (30) qui est réalisée avec une première sensibilité pour une première mesure de distance lors de laquelle une première distance d'un objet est mesurée en se basant sur le temps de parcours de lumière du rayon lumineux d'émission (14, 20) émis et reçu,
**caractérisé en ce que**
l'unité d'évaluation (30) est en outre réalisée pour constater une restriction de la visibilité en comparant la première distance d'objet avec une seconde distance d'objet obtenue d'une seconde mesure de distance avec une seconde sensibilité différente de la première sensibilité.

2. Capteur (10) selon la revendication 1,
dans lequel l'unité d'évaluation (30) est réalisée pour évaluer le signal de réception avec un seuil de détection (42) lors de la première mesure de la distance.

3. Capteur (10) selon la revendication 2,
dans lequel la seconde sensibilité est réglée par utilisation d'un autre seuil (44) différent du seuil de détection (42), par une modification de la puissance de sortie de l'émetteur de lumière (12) et/ou par une modification d'un facteur d'amplification d'un amplificateur attribué au récepteur de lumière (24).

4. Capteur (10) selon l'une des revendications précédentes,
dans lequel l'unité d'évaluation (30) est réalisée pour vérifier si la première distance d'objet et la seconde distance d'objet diffèrent l'une de l'autre de plus d'une différence de distance maximale.

5. Capteur (10) selon l'une des revendications précédentes,
dans lequel l'unité d'évaluation (30) est réalisée pour détecter une visibilité restreinte en se basant sur une déviation abrupte (48) vers des valeurs de distance plus importantes des secondes distances d'objet mesurées respectives par rapport aux premières distances d'objet, lors d'une seconde mesure de distance moins sensible, et/ou en se basant sur une déviation abrupte (48) vers des valeurs de distance plus faibles, lors d'une seconde mesure de distance plus sensible.

6. Capteur (10) selon l'une des revendications précédentes,
dans lequel l'unité d'évaluation (30) est réalisée pour effectuer la seconde mesure de distance et/ou son évaluation uniquement sélectivement dans un mode de fonctionnement à détection de restrictions de visibilité.

7. Capteur (10) selon l'une des revendications précédentes,
dans lequel l'unité d'évaluation (30) est réalisée pour effectuer une seconde mesure de distance entre les premières mesures de distance.

8. Capteur (10) selon l'une des revendications 1 à 6,
dans lequel l'unité d'évaluation (30) est réalisée pour effectuer une première mesure de distance et une seconde mesure de distance parallèlement l'une à l'autre.

9. Capteur (10) selon l'une des revendications 1 à 6,
dans lequel l'unité d'évaluation (30) est réalisée pour recevoir la seconde distance d'objet en provenance d'un autre capteur.

10. Capteur (10) selon l'une des revendications précédentes,
dans lequel l'unité d'évaluation (30) est réalisée pour évaluer une restriction de la visibilité en tenant compte d'une troisième distance d'objet obtenue d'une troisième mesure de distance avec une troisième sensibilité différente de la première sensibilité et de la seconde sensibilité.

11. Capteur (10) selon l'une des revendications précédentes,
dans lequel le capteur (10) est réalisé sous forme de capteur sécurisé qui comprend une sortie sécurisée (36) et dont l'unité d'évaluation (30) est réalisée pour émettre un signal de sécurité via la sortie sécurisée (36) si un événement important pour la sécurité est détecté dans la zone à surveiller (18), et l'unité d'évaluation (30) est en particulier réalisée pour émettre un signal de sécurité si le capteur (10) détecte une restriction de la visibilité.

12. Procédé de détection et détermination de la distance d'objets dans une zone à surveiller (18), dans lequel un rayon lumineux d'émission (14) est émis, une lumière (20) réémise ou réfléchie par des objets est détectée pour en générer un signal de réception, et lors d'une première mesure de distance avec une première sensibilité, une première distance d'objet est mesurée en se basant sur le temps de parcours de lumière du rayon lumineux d'émission (14, 20) émis et reçu,
**caractérisé en ce que**
une restriction de la visibilité est constatée en comparant la première distance d'objet avec une seconde distance d'objet obtenue d'une seconde mesure de distance avec une seconde sensibilité différente de la première sensibilité.
